Europäisches Patentamt

(19) European Patent Office

Office européen des brevets

(11) Publication number: **0 069 506**
**B1**

(12) **EUROPEAN PATENT SPECIFICATION**

(45) Date of publication of patent specification: **09.09.87**

(51) Int. Cl.⁴: **F 16 H 37/04**

(21) Application number: **82303268.5**

(22) Date of filing: **23.06.82**

(54) **Motor vehicle transmission mechanism.**

(30) Priority: **23.06.81 JP 96024/81**

(43) Date of publication of application:
**12.01.83 Bulletin 83/02**

(45) Publication of the grant of the patent:
**09.09.87 Bulletin 87/37**

(84) Designated Contracting States:
**DE FR GB**

(56) References cited:
**AT-B- 348 876**
**DE-C- 921 729**
**FR-A-1 360 006**
**FR-A-2 052 862**
**US-A-2 923 176**

(73) Proprietor: **HONDA GIKEN KOGYO KABUSHIKI KAISHA**
**27-8, 6-chome, Jingumae**
**Shibuya-ku, Tokyo 150 (JP)**

(72) Inventor: **Nishimura, Sadanori**
**299-10, Tsuchiya**
**Omiya-shi Saitama-ken (JP)**

(74) Representative: **MacFarlane, John Anthony Christopher et al**
**HASELTINE LAKE & CO. Hazlitt House 28, Southampton Buildings Chancery Lane London WC2A 1AT (GB)**

Courier Press, Leamington Spa, England.

## Description

This invention relates to motor vehicle transmission mechanism wherein a reverse driving train and a plurality of forward driving trains are provided between an input shaft and an output shaft, which shafts are disposed parallel with one another.

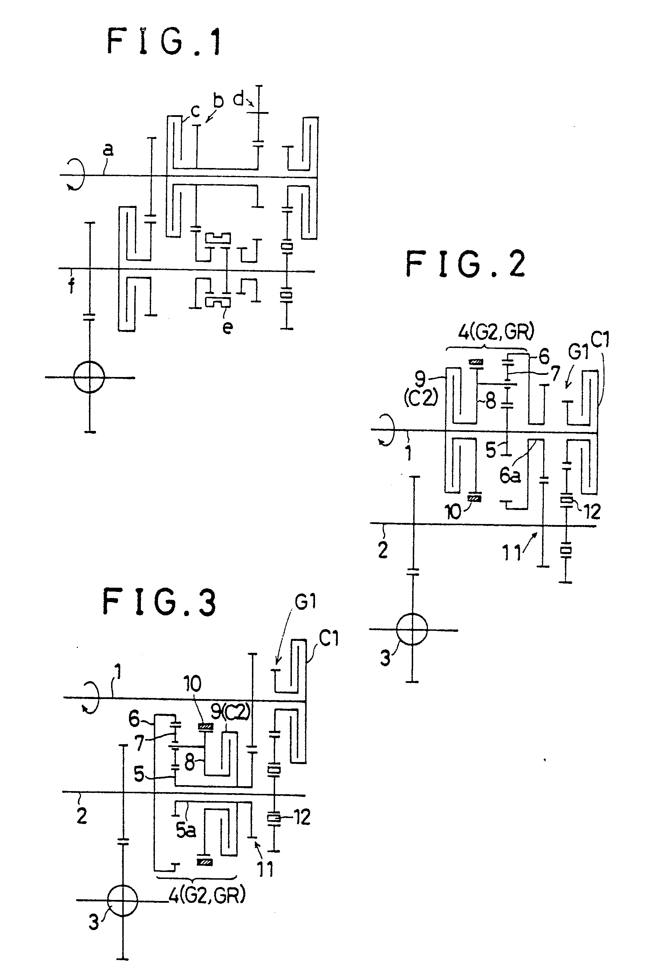

In Figure 1 of the accompanying drawings there is shown, diagrammatically, a known transmission mechanism having parallel input and output shafts and in which an oil pressure operated clutch c for a forward driving train b provided on the input shaft a is used also as an oil pressure operated clutch for a reverse driving train d so that an oil pressure operated clutch exclusively for the reverse driving train is omitted, and thereby the axial longitudinal length of the transmission mechanism as a whole can be shortened to such a size that the mechanism can be mounted in a small-sized front-engine front-wheel-drive motorcar. It has been usual in such a transmission mechanism that the two driving trains b or d are selectively connected to the output shaft f through a selection gear e that is moved by operation of a shift lever, and consequently such mechanism involves various inconveniences as follows:—

i) In a changeover operation the lever has to be moved from a parking position to a forward driving position through a reverse driving position and a neutral position, so that in the course of changeover operation thereof from the parking position to the forward driving position, the selection gear e is moved unnecessarily first to the reverse driving position (on the right-hand side in Figure 1), and thereafter is moved to the forward driving position (on the left-hand side in Figure 1). As a result impact noise is liable to be generated owing to this gear movement. Furthermore, upon changeover to, or from, the reverse driving position, particularly upon changeover from the reverse driving position on the right-hand side to the forward driving position on the left-hand side, impact noise is liable to be generated.

ii) It is necessary to move the selection gear e for changeover after this gear e has been stopped and the power transmission to the two driving trains cut off, and therefore it is inevitable that the oil pressure operated clutch c has to be provided on the input shaft a, and that the selection gear e has to be provided on the output shaft f, as illustrated. Thus, freedom of design to achieve a compact transmission mechanism is not available.

There is also known a coaxial input/output shaft transmission mechanism wherein a plurality of planetary gears is used for effected change speed between a reverse driving stage and multiforward-driving stages. This type of mechanism is advantageous in that changeover of a gear as above becomes unnecessary and the generation of impact noise can be avoided, but the inconvenience arises that, because the number of gears is greater than in the parallel input/output shafts mechanism, the transmission efficiency is lowered. In addition, because an input section and an output section are disposed on mutually opposite sides of the plurality of planetary gears, the disposition of the input and output sections restricts freedom of design for achieving a compact mechanism.

In Austrian Patent Specification AT—B—348 876 (STEYR DAIMLER PUCH) there is disclosed a transmission mechanism wherein a reverse gear train (R) and a plurality of forward gear trains (I, II ... IV) are provided between an input shaft (2) and an output shaft (3) which are disposed in parallel with one another. The reverse gear train (R) and the lowest forward gear train (I) is composed of a single planetary gear arrangement (11 ... 14) comprising a sun gear (13) that can be fixed to and therefore can move with the output shaft (3), a ring gear (11) that moves with the input shaft (2), and a supporting arm (14) mounted on the output shaft (3) and supporting a planetary gear (12) meshed with the sun and ring gears (13 and 11). The ring gear (11) is connected to the input shaft (2) so as to move therewith through a gear train (8). The planetary gear arrangement (11 ... 14) is provided with a clutch element (15 ... 17) for causing the supporting arm (14) to rotate fast with the sun gear (13) in conjunction with the output shaft (3), and a brake element (15a/18/20) for restraining rotation of the supporting arm (14), so that the planetary gear arrangement (11 ... 14) may be changed over selectively to serve either as said lowest forward gear train (I) by engagement of the clutch element (15 ... 17) or as the reverse gear train (R) by operation of the brake element (15a/18/20). In this mechanism, since the first speed gear train and the reverse gear train are constituted by a single common planetary gear arrangement, shaft portions supporting this gear arrangement have applied thereto a large load not only at the time of first speed driving but also at the time of reverse driving. In addition input and output shafts are supported at respective both ends on end walls of a transmission casing, and all the gear trains including the planetary gear arrangement are disposed in this long span, so that the supporting rigidness for the gears of the gear arrangement is low, and the shafts are liable to be bent and to be low in durability.

According to the present invention there is provided a transmission mechanism wherein:

(a) a reverse gear train and a plurality of forward gear trains are provided between two shafts that are, respectively, an input shaft and an output shaft which are disposed in parallel with one another;

(b) the reverse gear train and only one of the forward gear trains are composed of a single planetary gear arrangement comprising a sun gear and a ring gear;

(c) a supporting arm supports a planetary gear meshed with the sun and ring gears;

(d) there is a further gear train connecting the planetary gear arrangement to one of the two shafts; and

(e) the planetary gear arrangement may be changed over selectively to serve either as said one forward gear train by engagement of a clutch element for causing the supporting arm to rotate fast with the sun gear, or as the reverse gear train by operation of a brake element for restraining rotation of the supporting arm;

characterised in that:

(f) the sun gear moves with the input shaft and the ring gear moves with the output shaft;

in that according to a prior selection:

(g) the supporting arm is mounted on one of said two shafts and that one of the two gears that moves with the shaft on which the supporting arm is mounted is fixed to this shaft whereas the other of the gears is connected to the shaft with which it moves through said further gear train;

and in that according to another selection:

(h) the planetary gear arrangement is disposed to one side, and the (or each) forward gear train other than said one forward gear train is disposed on the other side, of a shaft supporting wall of a casing of the transmission mechanism. In this transmission mechanism action points of loads in relation to input and output shafts are different one from another at the time of first speed driving and at the time of reverse driving, and all the action points are positioned near the shaft supporting wall so that the shafts are restrained against bending. Furthermore, the length of the mechanism in the axial direction can be minimised, and changeover operation between forward running and reverse running is carried out without the use of a selection gear so that generation of impact noise is avoided. Additionally, the planetary gear arrangement can be disposed on either the input shaft or the output shaft giving freedom of design. When the planetary gear arrangement is selectively operated to function as the forward gear train, the sun gear and the ring gear are brought into a direct coupling condition and thus any lowering in the transmission efficiency is prevented.

For a better understanding of the invention, and to show how the same may be carried into effect, reference will now be made, by way of example, to Figures 2 to 5 of the accompanying drawings, in which:—

Figure 2 shows, diagrammatically, a motor vehicle transmission mechanism,

Figure 3 shows, diagrammatically, a modified form of mechanism, and

Figures 4 and 5 are sectional side views of other forms of transmission mechanism.

Referring first to Figures 2 and 3, in each of these Figures the transmission mechanism has two forward stages and one reverse stage. Numeral 1 denotes an input shaft connected to an internal combustion engine and numeral 2 denotes an output shaft connected through a differential gear 3 to driving road wheels of a vehicle, the input shaft 1 and the output shaft 2 being disposed in parallel with one another. There are provided between the two shafts 1, 2 a low speed first forward gear train G1 having a first speed clutch C1 of oil pressure operated type or electromagnetic type, a high speed second forward gear train G2, and a reverse gear train GR. The gear trains G2 and GR are composed of a single planetary gear arrangement 4.

In the planetary gear arrangement 4 a sun gear 5 moves with the input shaft 1, a ring gear 6 moves with the output shaft 2, and a supporting arm 8 supporting a planetary gear 7 meshed with the two gears 5, 6 is mounted on the input shaft 1 as shown in Figure 2, or on the output shaft 2 as shown in Figure 3. The planetary gear arrangement 4 is provided with a clutch element 9 comprising a second speed clutch C2 for causing the supporting arm 8 to rotate fast with the sun gear 5, in conjunction with the input shaft 1, and a brake element 10 comprising an oil pressure operated or electromagnetic brake for restraining rotation of the supporting arm 8.

In more detail, in the example shown in Figure 2, the input shaft 1 has fixed thereon the sun gear 5, whereas the ring gear 6 and the supporting arm 8 are rotatably supported on the shaft 1. The ring gear 6 is connected to the output shaft 2 through a gear train 11 connected to a supporting shaft 6a of the gear 6 and extending between the input and output shafts 1, 2. The supporting arm 8 is connected to the input shaft 1 through the clutch element 9.

In the example shown in Figure 3, the output shaft 2 has fixed thereon the ring gear 6, whereas the sun gear 5 and the supporting arm 8 are rotatably supported on the shaft 2. The sun gear 5 is connected to the input shaft 1 through a gear train 11 connected to a supporting shaft 5a of the gear 5 and extending between the input and output shafts 1, 2. The supporting arm 8 is connected to the supporting shaft 5a through the clutch element 9.

Numeral 12 denotes a one-way clutch interposed in the first speed forward gear train G1.

Operation is as follows:—

If a shift lever (not shown) is changed-over to a reverse driving position, the brake element 10 is operated to restrain the supporting arm 8 from rotating and hence the planetary gear 7 is prevented from rotating round the shaft 1 or the shaft 2. By rotation of the sun gear 5 together with rotation of the input shaft 1, the ring gear 6 is given a reduced rotation in the direction reverse to the rotary direction of the sun gear 5 through the planetary gear 7. Thus, the planetary gear arrangement 4 has been selected to operate as the reverse gear train GR, and the vehicle will run in reverse.

If the shift lever is changed-over from the reverse driving position to a neutral position, the restraining operation of the brake element 10 is released, and if the shift lever is then changed-over from the neutral position to a forward driving position for running with automatic speed changes, at first the first speed clutch C1 is engaged and thereby the first speed forward gear train G1 is established. Thereafter, as running speed increases, the clutch element 9 serving as the second speed clutch is engaged and thereby the planetary gear 7 is rotated round the shaft 1 or 2 fast with the sun gear 5 and therefore at the same rotational speed as the gear 5. As the ring gear 6 is meshed with the planetary gear 7 it also is rotated at the same speed as the sun gear 5. Consequently, there is brought about the condition that the sun gear 5 and the ring gear 6 are directly coupled together, and the planetary gear arrangement 4 has thus been selected to operate as the high speed second forward gear train G2, and thus the vehicle runs at the second speed state. In this running condition transmission loss between the sun gear 5 and the ring gear 6 decreased as much as possible because these two gears 5, 6 are in the direct coupling condition mentioned above, and thus the input shaft 1 and the output shaft 2 are in the condition where both shafts are directly connected through the gear train 11, and thus there is effected a high efficiency power transmission similar to that effected when running under the first speed forward gear train G1.

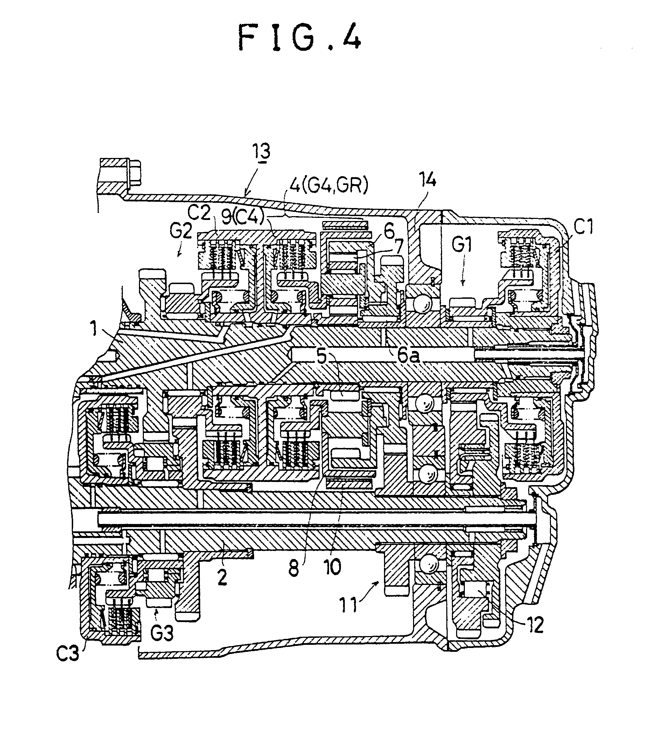

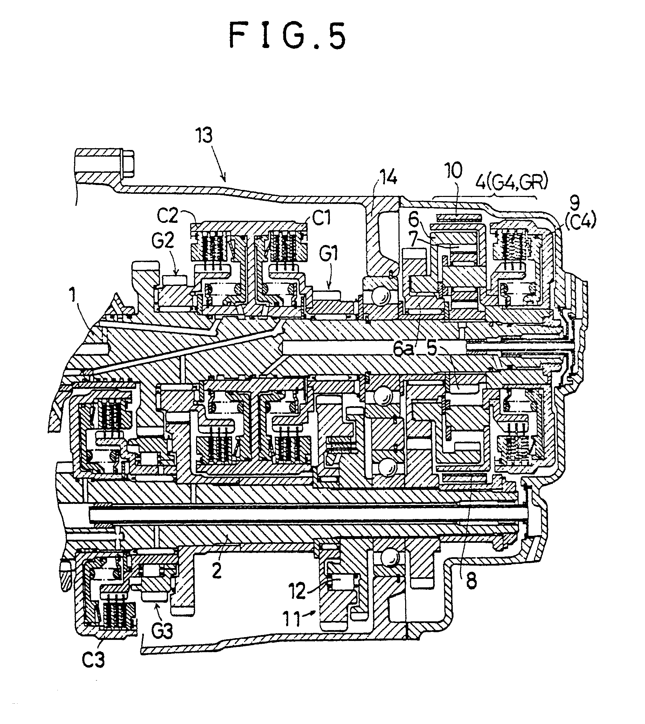

Whilst explanation has been given with reference to the illustrated two forward stages/one reverse stage transmission mechanism, the mechanism could be a higher than two-stage multi-forward-stage transmission mechanism. In this connection, Figures 4 and 5 each show transmissions having four forward stages and one reverse stage. In these transmissions, a fourth speed forward gear train G4 and the reverse gear train GR are composed of a planetary gear arrangement 4 corresponding to that described with reference to Figure 2, but it could be that a third speed forward gear train G3 and the reverse gear train GR are composed of the planetary gear arrangement 4.

Referring to Figures 4 and 5, numerals C3 and C4 denote a third speed clutch and a fourth speed clutch which are, respectively, operated by respective shift operations to third speed and fourth speed running, and in the illustrated forms the clutch element 9 of the planetary gear arrangement 4 is the fourth speed clutch C4 itself.

Transmission torque is comparatively high when driving in reverse and when running at the first forward speed, so that the input and output shafts 1, 2 are liable to be deformed. For preventing this, it is preferable that the first speed forward gear train G1 and the planetary gear arrangement 4 are disposed one on one side and the other on the other side, that is, to the front and to the rear, of a shaft supporting wall 14 of a transmission casing 13. Namely, the arrangement 4 is in front of this wall and the gear train G1 is to the rear thereof as shown in Figure 4, or vice versa as shown in Figure 5.

If, as mentioned above, the forward gear train which is constructed in common with the reverse gear train GR is a high speed stage (for example, third or fourth speed stage), that is a speed stage that is used comparatively more frequently, there is minimised the possibility that the direct coupling between the sun gear 5 and the ring gear 6 lowers transmission efficiency. Thus there is achieved an improvement in minimising fuel consumption.

As, in all the forms described, one of the plurality of forward gear trains and the reverse gear train, provided in a parallel input/output shaft transmission, are composed of the planetary gear arrangement, the length of the mechanism in the axial direction can be minimised, and changeover operation between forward running and reverse running is carried out without the use of a selection gear so that generation of impact noise is avoided. Additionally, the planetary gear arrangement can be disposed on either the input shaft or the output shaft giving freedom of design. When the planetary gear arrangement is selectively operated to function as the forward gear train, the sun gear and the ring gear are brought into a direct coupling condition and thus any lowering in the transmission efficiency is prevented. This feature, in conjunction with the fact that the other forward gear train(s) is/are of a non-planetary interengaging gear construction, results in a transmission efficiency that is excellent in comparison with that in a coaxial input/output shaft transmission.

## Claims

1. A transmission mechanism wherein:

(a) a reverse gear train (GR) and a plurality of forward gear trains (G1, G2) are provided between two shafts that are, respectively, an input shaft (1) and an output shaft (2) which are disposed in parallel with one another;

(b) the reverse gear train (GR) and only one of the forward gear trains (G1 or G2) are composed of a single planetary gear arrangement (4) comprising a sun gear (5) and a ring gear (6);

(c) a supporting arm (8) supports a planetary gear (7) meshed with the sun and ring gears (5 and 6);

(d) there is a further gear train (11) connecting the planetary gear arrangement (4) to one of the two shafts (1 or 2); and

(e) the planetary gear arrangement (4) may be changed over selectively to serve either as said one forward gear train (G1 or G2) by engagement of a clutch element (9) for causing the supporting arm (8) to rotate fast with the sun gear (5), or as the reverse gear train by operation of a brake element (10) for restraining rotation of the supporting arm (8);

characterised in that:

(f) the sun gear (5) moves with the input shaft (1) and the ring gear (6) moves with the output shaft (2);

in that according to a prior selection:

(g) the supporting arm (8) is mounted on one of said two shafts (1 or 2) and that one of the two gears (5 or 6) that moves with the shaft (1 or 2) on which the supporting arm (8) is mounted is fixed to this shaft whereas the other of the gears (6 or 5) is connected to the shaft (2 or 1) with which it moves through said further gear train (11);

and in that according to another selection:

(h) the planetary gear arrangement (5) is disposed to one side, and the (or each) forward gear train (G1 or G2) other than said one forward gear train is disposed on the other side, of a shaft supporting wall (14) of a casing (13) of the transmission mechanism.

2. A transmission mechanism as claimed in claim 1, wherein the forward gear trains comprise a first speed train (G1) and a second speed train (G2), and wherein it is the second speed train (G2) that is said one forward gear train.

3. A transmission mechanism as claimed in claim 1, wherein the forward gear trains comprise a first speed train (G1), a second speed train (G2), a third speed train (G3) and a fourth speed train (G4), and wherein it is the third speed train (G3) that is said one forward gear train.

4. A transmission mechanism as claimed in claim 1, wherein the forward gear trains comprise a first speed train (G1), a second speed train (G2), a third speed train (G3) and a fourth speed train (G4), and wherein it is the fourth speed train (G4) that is said one forward gear train.

**Patentansprüche**

1. Antriebsvorrichtung, bei der

(a) ein Rückwärtsganggetriebe (GR) und eine Vielzahl von Vorwärtsganggetrieben (G1, G2) zwischen zwei Wellen vorgesehen sind, die eine Eingangswelle (1) bzw. eine Ausgangswelle (2) sind, welche parallel zueinander angeordnet sind,

(b) das Rückwärtsganggetriebe (GR) und nur eines der Vorwärtsganggetriebe (G1 oder G2) aus einer einzigen Planetengetriebeanordnung (4) zusammengesetzt sind, die ein Sonnenrad (5) und einen Zahnkranz (6) enthält,

(c) ein Tragarm (8) ein Planetenrad (7) hält, das mit dem Sonnenrad und dem Zahnkranz (5 u. 6) kämmt,

(d) ein weiteres Ganggetriebe (11) vorgesehen ist, das die Planetengetriebeanordnung (4) mit einer der beiden Wellen (1 oder 2) verbindet, und

(e) die Planetengetriebeanordnung (4) selektiv umgeschaltet werden kann, um entweder als das Vorwärtsganggetriebe (G1 oder G2) durch Eingriff eines Kupplungselements (9) zum Veranlassen des Tragarms (8), mit dem Sonnenrad (5) schnell zu drehen, oder als das Rückwärtsganggetriebe durch Betätigen eines Bremselements (10) zum Anhalten der Drehung des Tragarms (8) zu dienen, dadurch gekennzeichnet, daß

(f) sich das Sonnenrad (5) mit der Eingangswelle (1) und der Zahnkranz (6) mit der Ausgangswelle (2) bewegt,

in Übereinstimmung mit einer ersten Auswahl

(g) der Tragarm (8) auf einer der beiden Wellen (1 oder 2) und dasjenige der beiden Getriebeelemente (5 oder 6), das sich mit der Welle (1 oder 2) bewegt, auf welcher der Tragarm (8) montiert ist, an dieser Welle befestigt ist, während das andere der beiden Getriebeelemente (6 oder 5) mit der Welle (2 oder 1) verbunden ist, mit welcher es sich durch das weitere Ganggetriebe (11) bewegt, und

in Übereinstimmung mit einer anderen Auswahl

(h) die Planetengetriebeanordnung (4) zu einer Seite hin angeordnet ist und das Vorwärtsganggetriebe (oder jedes dieser) (G1 oder G2), das nicht das besagte Vorwärtsgangsgetriebe ist, auf der anderen Seite einer Wellentragwand (14) eins Gehäuses (13) der Antriebsvorrichtung angeordnet ist.

2. Antriebsvorrichtung nach Anspruch 1, bei der die Vorwärtsganggetriebe aus einem Erstgeschwindigkeitsgetriebe (G1) und einem Zweitgeschwindigkeitsgetriebe (G2) bestehen und bei der es das Zweitgeschwindigkeitsgetriebe (G2) ist, welches das besagte Vorwärtsganggetriebe ist.

3. Antriebsvorrichtung nach Anspruch 1, bei der die Vorwärtsganggetriebe aus einem Erstgeschwindigkeitsgetriebe (G1), einem Zweitgeschwindigkeitsgetriebe (G2), einem Drittgeschwindigkeitsgetriebe (G3) und einem Viertgeschwindigkeitsgetriebe (G4) bestehen und bei der es das Drittgeschwindigkeitsgetriebe (G3) ist, welches das besagte Vorwärtsganggetriebe ist.

4. Antriebsvorrichtung nach Anspruch 1, bei der die Vorwärtsganggetriebe aus einem Erstgeschwindigkeitsgetriebe (G1), einem Zweitgeschwindigkeitsgetriebe (G2), einem Drittgeschwindigkeitsgetriebe (G3) und einem Viertgeschwindigkeitsgetriebe (G4) bestehen und bei der es das Viertgeschwindigkeitsgetriebe (G4) ist, welches das besagte Vorwärtsganggetriebe ist.

**Revendications**

1. Mécanisme de transmission, dans lequel:

(a) un train (GR) d'engrenages de marche arrière et plusieurs trains (G1, G2) d'engrenages de marche avant sont interposés entre deux arbres constituant, respectivement, un arbre d'entrée (1) et un arbre de sortie (2) disposés parallèlement l'un à l'autre;

(b) le train (GR) d'engrenages de marche arrière et seulement l'un (G1 ou G2) des trains d'engrenages de marche avant consistent en un seul et unique train épicycloïdal (4) comprenant une roue planétaire (5) et une couronne dentée (6);

(c) un bras de support (8) supporte un pignon satellite (7) en prise avec la roue planétaire et la couronne dentée (5 et 6);

(d) un train d'engrenages supplémentaire (11) relie le train épicycloïdal (4) à l'un des deux arbres (1 ou 2); et

(e) le train épicycloïdal (4) peut être commuté sélectivement pour remplir la fonction soit dudit train précité (G1 ou G2) d'engrenages de marche avant, par venue en prise d'un élément d'accouplement (9) destiné à imprimer au bras de support (8) une rotation rapide avec la roue planétaire (5), soit du train d'engrenages de marche arrière, par actionnement d'un élément de freinage (10) pour entraver la rotation du bras de support (8);

caractérisé par le fait que:

(f) la roue planétaire (5) se déplace en même temps que l'arbre d'entrée (1) et la couronne dentée (6) se déplace en même temps que l'arbre de sortie (2);

par le fait que, conformément à une première sélection:

(g) le bras de support (8) est monté sur l'un des deux arbres précités (1 ou 2), et celui des deux pignons (5 ou 6) qui se déplace avec l'arbre (1 ou 2) sur lequel le bras de support (8) est calé est assujetti à cet arbre, tandis que l'autre des pignons (6 ou 5) est relié à l'arbre (2 ou 1) avec lequel il se déplace par l'intermédiaire dudit train d'engrenages supplémentaire (11);

et par le fait que, conformément à une autre sélection:

(h) le train épicycloïdal (4) est disposé sur l'un des côtés, et le (ou chaque) train (G1 ou G2) d'engrenages de marche avant autre que ledit train précité d'engrenages de marche avant est disposé de l'autre côté d'une paroi (14) d'un carter (13) du mécanisme de transmission, supportant les arbres.

2. Mécanisme de transmission selon la revendication 1, dans lequel les trains d'engrenages de marche avant comprennent un train (G1) de première vitesse et un train (G2) de seconde vitesse; et dans lequel c'est le train (G2) de seconde vitesse qui constitue le train précité d'engrenages de marche avant.

3. Mécanisme de transmission selon la revendication 1, dans lequel les trains d'engrenages de marche avant comprennent un train (G1) de première vitesse, un train (G2) de seconde vitesse, un train (G3) de troisième vitesse et un train (G4) de quatrième vitesse; et dans lequel c'est le train (G3) de troisième vitesse qui constitue le train précité d'engrenages de marche avant.

4. Mécanisme de transmission selon la revendication 1, dans lequel les trains d'engrenages de marche avant comprennent un train (G1) de première vitesse, un train (G2) de seconde vitesse, un train (G3) de troisième vitesse et un train (G4) de quatrième vitesse; et dans lequel c'est le train (G4) de quatrième vitesse qui constitue le train précité d'engrenages de marche avant.

# FIG.1

# FIG.2

# FIG.3

# FIG.4

# F I G. 5